# FASCICULE DE BREVET EUROPEEN

(11) **EP 3 575 774 B1**
(45) Date de publication et mention de la délivrance du brevet: **30.08.2023**
(21) Numéro de dépôt: 19177020.5
(22) Date de dépôt: 28.05.2019
(51) Int. Cl.: G01N 15/14, G01J 3/26, G01N 21/03, G01J 3/28, G02B 5/28, G03H 1/02, G01J 3/02, G01N 15/10, G03H 1/04, G03H 1/00, G01N 15/02

(54) **PROCÉDÉ D'OBSERVATION DE PARTICULES, EN PARTICULIER DES PARTICULES SUBMICRONIQUES**
VERFAHREN ZUR BEOBACHTUNG VON TEILCHEN, INSBESONDERE TEILCHEN IM SUBMIKROMETERBEREICH
METHOD FOR OBSERVING PARTICLES, IN PARTICULAR SUBMICRON PARTICLES

(30) Priorité: 31.05.2018 FR 1854721
(43) Date de publication de la demande: 04.12.2019
(73) Titulaire: Commissariat à l'Énergie Atomique et aux Énergies Alternatives, 75015 Paris cedex (FR)
(72) Inventeur: BENAHMED, Selimen, 38054 GRENOBLE Cedex 9 (FR); ALLIER, Cédric, 38054 GRENOBLE Cedex 9 (FR); BOUTAMI, Salim, 38054 GRENOBLE Cedex 9 (FR)
(74) Mandataire: INNOV-GROUP

(56) Documents cités:
- EP-A1- 1 953 529
- EP-A1- 3 147 646
- WO-A1-2017/162985
- CN-A- 104 280 321
- US-A- 4 685 802
- US-A- 5 793 485

## Description

### DOMAINE TECHNIQUE

Le domaine technique de l'invention est un procédé d'observation d'un échantillon, et en particulier un échantillon comportant des particules biologiques, par exemple des cellules.

### ART ANTERIEUR

Le recours à la microscopie pour l'observation de particules de tailles micrométriques est usuel. Cette technique consiste à focaliser une onde lumineuse incidente, émise par une source de lumière, sur une particule. Sous l'effet de l'illumination, la particule diffracte ou transmet une onde lumineuse vers un capteur d'image. Toutefois, plus la taille de la particule observée diminue, plus la quantité de lumière diffusée par la particule est faible. Il en résulte une diminution de la sensibilité de l'observation. Par ailleurs, lorsque la taille de la particule devient du même ordre de grandeur que la longueur d'onde de l'onde lumineuse incidente, la résolution spatiale est limitée. Aussi, l'application de la microscopie pour l'observation de particules de taille submicroniques se heurte à des limitations en sensibilité et en résolution spatiale.

L'observation d'échantillons, et en particulier des échantillons biologiques, par imagerie sans lentille, connaît un développement important depuis ces dix dernières années. Cette technique permet d'observer un échantillon en le plaçant entre une source de lumière, produisant une onde lumineuse incidente, et un capteur d'image, sans disposer de système optique de grossissement entre l'échantillon et le capteur d'image. Ainsi, le capteur d'image collecte une image d'une onde lumineuse transmise par l'échantillon. L'imagerie sans lentille désigne le fait qu'aucune optique de formation d'image n'est disposée entre l'échantillon et le capteur d'image. L'image formée par le capteur d'image comporte des figures d'interférence entre l'onde lumineuse incidente émise par la source et transmise par l'échantillon, et des ondes de diffraction, résultant de la diffraction, par des particules présentes dans l'échantillon, de l'onde lumineuse incidente. Ces figures d'interférences sont parfois dénommées figures de diffraction, ou désignées par le terme anglais « diffraction pattern ».

Cette technique est décrite dans de nombreux documents, par exemple WO200809033 ou US2012/0218379. Elle permet d'observer un échantillon comportant des particules, sur la base de figures de diffraction formées par chaque particule sous l'effet d'une illumination par une onde incidente. Les images obtenues peuvent être traitées par un algorithme de reconstruction holographique, ce qui permet d'obtenir des images de bonne qualité. Ainsi, l'imagerie sans lentille constitue une alternative simple à la microscopie classique. Elle permet d'obtenir une visualisation exploitable d'un échantillon, permettant de le caractériser. Elle permet par exemple l'identification ou le comptage de particules, en fonction de leur taille, ou en fonction de leur forme. Des exemples d'identification ou de comptage de particules biologiques sont par exemple donnés dans WO2016151248 ou dans WO2016151249.

Le document EP3147646 décrit un dispositif d'observation d'un échantillon par imagerie sans lentille, dans lequel l'échantillon est disposé contre un support comportant un réseau de diffraction. Le réseau de diffraction permet un couplage de l'onde lumineuse incidente dans un guide d'onde. Lorsqu'une particule est disposée au contact du guide d'onde, ou à une faible distance de ce dernier, une partie de l'onde lumineuse se propageant dans le guide d'onde est découplée. La particule diffracte une partie de l'onde lumineuse découplée, résultant en la propagation d'une onde lumineuse de diffraction vers le capteur d'image. Ce dernier forme une image sur laquelle la particule apparaît sous la forme d'une tache lumineuse. Un tel dispositif bénéficie d'une sensibilité de détection élevée.

Le document CN104280321A décrit un dispositif d'analyse d'un échantillon comportant des particules. Les particules sont disposées dans une cavité de type Fabry-Pérot. Les particules diffusent une lumière produite par un faisceau d'illumination incident. Au-delà d'un certain angle de diffusion, la lumière est transmise par la cavité et atteint un capteur d'image. Ce dernier permet une acquisition d'une image représentative d'une distribution de la taille des particules dans l'échantillon.

Le document EP1953529 décrit également le recours à une cavité optique de type Fabry-Pérot pour analyser un échantillon comportant des particules. La cavité optique présente une longueur d'onde de résonance, qui peut être modifiée par la présence de particules. Un capteur d'image permet une acquisition d'une image représentative d'un décalage spectral de la longueur d'onde de résonance induit par les particules.

Le document US5793485 décrit le recours à une cavité optique résonante pour analyser une particule. Un faisceau laser est focalisé sur la particule. Un capteur d'image est couplé, par une lentille, à la particule, selon une configuration en réflexion, le capteur d'image étant configuré pour former une image d'une lumière réfléchie par la particule.

Les inventeurs ont conçu un dispositif et un procédé d'observation de particules submicroniques par imagerie sans lentille, présentant une sensibilité élevée et une résolution spatiale améliorée. L'invention permet en particulier de former des images exploitables de petites particules, permettant une détection de ces dernières avec une sensibilité élevée. L'invention s'applique tout particulièrement à la détection de très petites particules.

### EXPOSE DE L'INVENTION

Un premier objet, qui ne fait pas partie de l'invention, est un dispositif pour réaliser une image d'au moins une particule, disposée dans échantillon, comportant :
- une source de lumière, apte à émettre une onde lumineuse, dite onde incidente, à une longueur d'onde d'émission, selon un axe de propagation, vers l'échantillon ;
- un capteur d'image ;
- un support, disposé entre la source de lumière et le capteur d'image, le support définissant un plan de support, le plan de support pouvant être configuré pour recevoir l'échantillon ;
le dispositif étant caractérisé en ce que :
- le support est transparent à la longueur d'onde d'émission et comporte un réflecteur inférieur, formé d'au moins deux matériaux ayant des indices de réfraction différents, à la longueur d'onde d'émission, le réflecteur inférieur s'étendant entre le plan de support et le capteur d'image;
- le dispositif comporte un réflecteur supérieur, formé d'au moins deux matériaux ayant des indices de réfraction différents, à la longueur d'onde d'émission, le réflecteur supérieur s'étendant entre le plan de support et la source de lumière ;
- le réflecteur supérieur est disposé face au réflecteur inférieur, de façon à former une cavité optique résonante ;
- le dispositif comporte un espace entre le réflecteur supérieur et le support, l'espace étant apte à être occupé par l'échantillon.

Le réflecteur supérieur est également transparent à la longueur d'onde d'émission.

Selon un mode de réalisation, le réflecteur inférieur est ou comporte un miroir de Bragg, dit miroir de Bragg inférieur, comportant une alternance périodique de couches minces formées par au moins deux matériaux ayant des indices de réfraction différents. Les couches minces formant le miroir de Bragg inférieur peuvent notamment s'étendre perpendiculairement à l'axe de propagation.

Selon un mode de réalisation, le réflecteur supérieur est ou comporte un miroir de Bragg, dit miroir de Bragg supérieur, comportant une alternance périodique de couches minces, formées par au moins deux matériaux ayant des indices de réfraction différents. Les couches minces formant le miroir de Bragg supérieur peuvent notamment s'étendre perpendiculairement à l'axe de propagation. Selon une variante, le dispositif comporte une lentille convergente, disposée entre le plan de support et la source de lumière, la lentille convergente étant agencée pour faire converger l'onde lumineuse incidente vers un point de focalisation situé dans la cavité. Les couches minces formant le miroir de Bragg supérieur peuvent alors s'étendre parallèlement à la lentille convergente. Les couches minces peuvent notamment être disposées entre la lentille convergente et la source de lumière. Selon cette variante, les couches minces se conforment à la forme de la lentille convergente.

Selon un mode de réalisation, le réflecteur inférieur est ou comporte un réseau de diffraction, dit réseau de diffraction inférieur, ménagé dans une première couche mince, et formant, dans cette dernière, un premier motif périodique.

Selon un mode de réalisation, le réflecteur supérieur est un réseau de diffraction, dit réseau de diffraction supérieur, ménagé dans une deuxième couche mince, et formant, dans cette dernière, un deuxième motif. Le deuxième motif peut être périodique. Le réseau de diffraction supérieur, formé dans le réflecteur supérieur peut être agencé pour faire converger l'onde lumineuse incidente vers un point de focalisation situé dans la cavité.

Selon un mode de réalisation, le réflecteur supérieur et le réflecteur inférieur sont ou comportent respectivement un miroir de Bragg. Selon un mode de réalisation, le réflecteur supérieur et le réflecteur inférieur sont ou comportent respectivement un réseau de diffraction. Selon un mode de réalisation, le réflecteur supérieur est ou comporte un miroir de Bragg, et le réflecteur inférieur est ou comporte un réseau de diffraction. Selon un autre mode de réalisation, le réflecteur supérieur est ou comporte un réseau de diffraction, et le réflecteur inférieur est ou comporte un miroir de Bragg.

Quels que soient les modes de réalisation, le réflecteur inférieur et le réflecteur supérieur peuvent comporter chacun deux matériaux présentant un écart d'indice de réfraction supérieur ou égal à 0,3. Le réflecteur inférieur et/ou le réflecteur supérieur peuvent notamment être formés, de façon non exhaustive, à partir des couples de matériaux suivants :
- silice et nitrure de silicium ;
- silice et oxyde de titane ;
- silice et silicium amorphe ;
- germanium et sulfure de zinc ;
- ou d'autres couples de matériaux connus de l'homme du métier pour réaliser un miroir de Bragg ou un réseau de diffraction.

Le réflecteur inférieur et le réflecteur supérieur peuvent notamment être éloignés l'un de l'autre, selon l'axe de propagation, d'une distance d'écartement étant un multiple de la longueur d'onde d'émission.

L'objet de l'invention est un procédé selon la revendication 1, le procédé étant un procédé de formation d'une image d'au moins une particule, disposée dans un échantillon, à l'aide d'un dispositif.

La localisation de la particule peut être effectuée dans un plan parallèle à un plan de détection selon lequel s'étend le capteur d'image.

Le procédé peut comporter une application d'un algorithme de reconstruction holographique à l'image acquise par le capteur d'image.

Selon un mode de réalisation, le dispositif comporte une lentille convergente, disposée entre le plan de support et la source de lumière, la lentille convergente étant agencée pour faire converger l'onde lumineuse incidente vers un point de focalisation situé dans la cavité formée par le dispositif. Le réseau périodique supérieur peut comporter un miroir de Bragg supérieur dont les couches minces s'étendent parallèlement à la lentille convergente. De façon alternative, le réflecteur supérieur du dispositif est un réseau de diffraction, dit réseau de diffraction supérieur, ménagé dans une deuxième couche mince, et formant, dans cette dernière, un deuxième motif périodique, le réseau de diffraction supérieur étant agencé pour faire converger l'onde lumineuse incidente vers un point de focalisation situé dans la cavité. Le procédé peut alors comporter une focalisation, par le réseau périodique supérieur, de l'onde lumineuse émise par la source de lumière, sur la particule. Le procédé peut alors comporter alors une focalisation, par le réflecteur supérieur, de l'onde lumineuse émise par la source de lumière, sur la particule. Selon ce mode de réalisation, le procédé peut comporter une illumination de l'échantillon selon différentes positions de la source de lumière et du réflecteur supérieur, selon une direction perpendiculaire à l'axe de propagation, à chaque position de la source de lumière correspondant un point de focalisation de l'onde lumineuse émise par la source de lumière, le point de focalisation étant situé dans la cavité optique.

Un autre objet qui ne fait pas partie de l'invention, est un capteur d'image, comportant un réflecteur inférieur tel que précédemment décrit, et solidaire de ce dernier. Le capteur d'image peut notamment comporter des pixels, arrangés selon une matrice, définissant un plan de détection. Le capteur d'image comporte un réflecteur, dit réflecteur inférieur, s'étendant face à la matrice de pixels, le réflecteur inférieur étant un formé d'au moins deux matériaux ayant des indices de réfraction différents, à une longueur d'onde d'émission. Le réflecteur inférieur est solidaire de la matrice de pixels. Le réflecteur inférieur peut être ou comporter un miroir de Bragg, ou un réseau de diffraction, tels que précédemment décrits, ou tels que décrits dans la description qui suit. Le réflecteur est disposé en amont de la matrice de pixels, de telle sorte qu'une onde lumineuse détectée par la matrice de pixels, traverse le réflecteur avant d'atteindre la matrice de pixels. D'autres avantages et caractéristiques ressortiront plus clairement de la description qui va suivre de modes particuliers de réalisation de l'invention, donnés à titre d'exemples non limitatifs, et représentés sur les figures listées ci-dessous.

### FIGURES

La figure 1A montre un exemple d'un premier mode de réalisation de l'invention. La figure 1B est un spectre de transmission d'une cavité optique résonante formée dans le premier mode de réalisation de l'invention. La figure 1C est une simulation représentative d'une propagation du champ électromagnétique à travers la cavité optique.
Les figures 2A à 2C illustrent des simulations effectuées selon une configuration de l'art antérieur, en considérant une particule de 0.1 µm de côté. Les figures 2D à 2F illustrent des simulations effectuées selon le premier mode de réalisation, en considérant une particule de 0.1 µm de côté.
Les figures 3A à 3C illustrent des simulations effectuées selon une configuration de l'art antérieur, en considérant une particule de 0.5 µm de côté. Les figures 3D à 3F illustrent des simulations effectuées selon le premier mode de réalisation, en considérant une particule de de 0.5 µm de côté.
Les figures 4A et 4B sont respectivement une mesure et une simulation d'une figure de diffraction obtenues en considérant une configuration de l'art antérieur. Ces figures valident l'algorithme de simulation de figures de diffraction (ou hologrammes) mis au point par les inventeurs.
Les figures 5A à 5J sont des simulations permettant de comparer des figures de diffraction respectivement obtenues selon une configuration de l'art antérieur et selon le premier mode de réalisation, et cela pour différentes tailles de particules. Les figures 5A à 5J illustrent le gain en sensibilité conféré par l'invention.
La figure 6 montre le gain en rapport signal à bruit apporté par l'invention, en fonction de la taille des particules, par rapport à une configuration de l'art antérieur.
Les figures 7A et 7B montrent des simulations d'images d'un échantillon comportant deux billes décalées axialement, en utilisant une configuration de l'art antérieur. Les figures 7C et 7D montrent des simulations d'images des échantillons respectivement observés sur les figures 7A et 7B, en mettant en oeuvre l'invention. Les figures 7A à 7D illustrent le gain en résolution spatiale conféré par l'invention.
La figure 8A est une simulation d'une image d'un échantillon comportant deux billes décalées selon une diagonale de l'image, en mettant en oeuvre l'invention. Les figures 8B et 8C sont des profils d'intensité obtenus à partir de la figure 8A.
La figure 9A montre un exemple d'un deuxième mode de réalisation de l'invention. La figure 9B montre une vue d'un réseau de diffraction mis en oeuvre dans le deuxième mode de réalisation.
Les figures 10A à 10F illustrent des simulations effectuées selon le deuxième mode de réalisation de l'invention.
La figure 11A montre un exemple d'un troisième mode de réalisation de l'invention.
La figure 11B montre un exemple d'un quatrième mode de réalisation de l'invention.
Les figures 12A et 12B sont des exemples de capteurs d'image intégrant un réflecteur, ces capteurs d'image étant adaptés à une mise en oeuvre de l'invention.

### EXPOSE DE MODES DE REALISATION PARTICULIERS

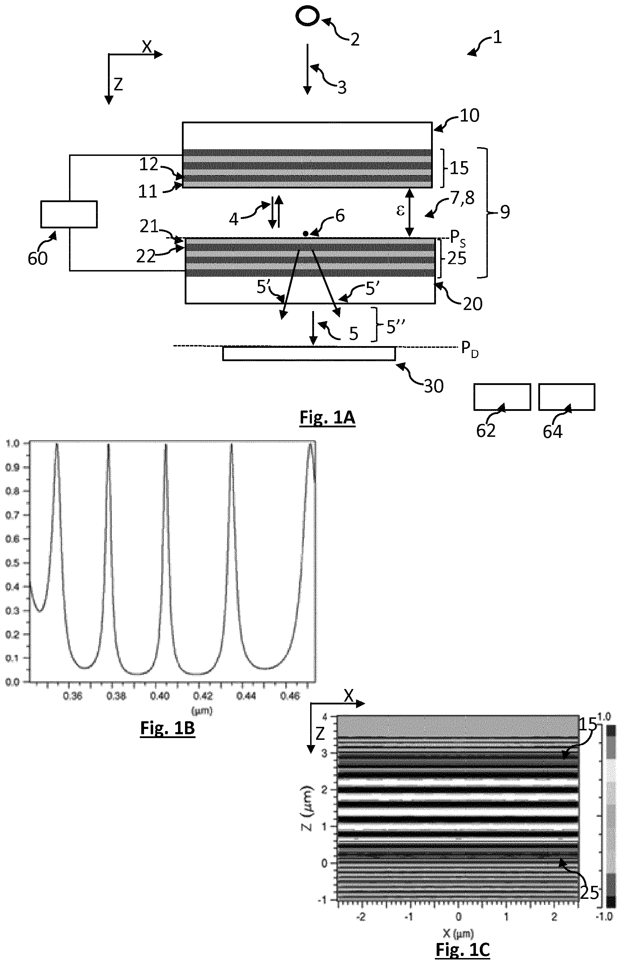

La figure 1A représente un premier mode de réalisation de l'invention. Une source de lumière 2 produit une onde lumineuse incidente 3 en direction d'un échantillon 7 disposé entre la source de lumière 2 et un capteur d'image 30. L'échantillon est disposé entre la source de lumière 2 est un support, dit support inférieur 20. L'échantillon peut être en contact avec le support inférieur 20. L'échantillon s'étend entre le support inférieur 20 et un support supérieur 10. Le support supérieur 10 peut notamment être disposé entre l'échantillon 7 et la source de lumière 2.

L'onde lumineuse 3 émise par la source de lumière, désignée par le terme onde lumineuse d'émission, s'étend dans une bande spectrale Δλ étroite autour d'une longueur d'onde d'émission λ. La largeur de la bande spectrale Δλ est de préférence inférieure à 50 nm, voire à 10 nm, voire à 5 nm ou 2 nm. La bande spectrale peut se situer dans le domaine visible, proche UV (> 200 nm), proche infra-rouge (< 1 µm) ou l'infra-rouge court, usuellement désigné par l'acronyme SWIR (Short Wavelenght Infrared), s'étendant entre 1 et 3 µm, ou le moyen infra-rouge, usuellement désigné par l'acronyme MWIR (Medium Wavelenght Infrared), s'étendant entre 3 et 5 µm, ou encore l'infra-rouge long, usuellement désigné par l'acronyme LWIR (Long Wavelenght Infrared), s'étendant entre 8 et 12 µm. L'onde lumineuse d'émission 3 se propage parallèlement à un axe de propagation Z.

La source de lumière peut être une source laser, ou une source lumineuse couplée à un filtre passe-bande définissant la bande spectrale Δλ. Il peut par exemple s'agir d'une diode électroluminescente. La source de lumière peut également être une extrémité d'une fibre optique, par exemple une fibre optique monomode, dont l'autre extrémité est couplée à une source lumineuse.

Dans cet exemple, l'échantillon 7 est un liquide comportant des particules 6. L'échantillon s'étend contre une face du support 20, formant un plan de support P_{S}. Le plan de support est perpendiculaire à l'axe Z. Il s'étend selon un axe latéral X et un axe longitudinal Y. D'une façon générale, une particule à observer a une taille submillimétrique (< 1 mm) ou submicronique (< 1 µm). Il peut notamment s'agir d'une particule biologique, de type bactérie, ou autre microorganisme, virus, cellule, microalgue. L'invention est particulièrement destinée à l'observation de particules de taille comprise entre 100 nm et 100 µm, et plus spécifiquement entre de taille inférieure à 1µm ou de l'ordre de 1 µm. Par taille, on entend un diamètre dans lequel la particule est inscrite ou un côté de la particule.

Le support inférieur 20, en dessus duquel est disposé l'échantillon, comporte un réflecteur 25, dit réflecteur inférieur. Le réflecteur inférieur peut être constitué d'une alternance deux matériaux 21,22 d'indices de réfraction différents, les deux matériaux pouvant être alternés selon l'axe de propagation, ou perpendiculairement à l'axe de propagation. Le réflecteur inférieur permet une modulation spatiale de l'indice de réfraction, à l'échelle de la longueur d'onde d'émission. Par indice de réfraction, on entend l'indice de réfraction à la longueur d'onde d'émission.

Dans le premier mode de réalisation, le réflecteur inférieur 25 est un miroir de Bragg, formé d'une alternance de couches minces transparentes et parallèles les unes aux autres. Par transparent, on entend transparent à la longueur d'onde d'émission λ. De façon connue en soi, chaque couche mince a une épaisseur égale optique λ/4, ce qui correspond à une épaisseur physique de λ/4n, ou n désigne l'indice de réfraction du matériau formant la couche mince.

Le support supérieur 10, s'étendant entre la source de lumière 2 et l'échantillon 7, comporte un réflecteur supérieur 15. Le réflecteur supérieur 15 peut être constitué d'une alternance de deux matériaux 11, 12 d'indices optiques différents, les deux matériaux pouvant être alternés selon l'axe de propagation, ou perpendiculairement à l'axe de propagation. Dans le premier mode de réalisation, le réflecteur supérieur 15 est un miroir de Bragg, formé d'une alternance de couches minces transparentes et parallèles les unes aux autres.

Un espace 8 s'étend entre le support supérieur 10 et le support inférieur 20. L'espace 8 peut être partiellement ou totalement occupé par l'échantillon 7. Le réflecteur supérieur 15 et le réflecteur inférieur 25 forment une cavité optique résonante 9, de type cavité de Fabry-Perot. L'écartement ε, selon l'axe de propagation Z, entre le réflecteur supérieur 15 et le réflecteur inférieur 25 est de préférence un multiple de λ, c'est-à-dire *k* fois λ, *k* étant un entier positif L'écartement ε est par exemple compris entre 1 µm et 1 cm. L'écartement ε peut être ajusté par un moyen d'ajustement motorisé 60. De façon alternative, on peut ajuster la longueur d'onde λ, compte tenu de l'écartement ε, de façon que la longueur d'onde ajustée corresponde à un mode résonant de la cavité.

Le miroir de Bragg supérieur 15 comporte une alternance de couches minces en un premier matériau 11 et en un deuxième matériau 12. Le premier matériau 11 a un premier indice de réfraction n₁. Le deuxième matériau 12 a un deuxième indice de réfraction n₂, différent du premier indice de réfraction. L'écart entre le premier indice de réfraction n₁ et le deuxième indice de réfraction n₂ est de préférence supérieur ou égal à 0.3.

Dans cet exemple, le premier matériau 11 est de la silice (oxyde de silicium SiO₂ - indice de réfraction n₁ = 1.4 lorsque λ = 1.5 µm), tandis que le deuxième matériau 12 est du nitrure de silicium (Si₃N₄ - indice de réfraction n₂ = 2 lorsque λ = 1.5 µm). Le nitrure de silicium peut être remplacé par de l'oxyde de titane (TiO₂), dont l'indice de réfraction est égal à 2.4 lorsque λ = 1.5 µm.

Le miroir de Bragg inférieur 25 comporte une alternance de couches minces en un troisième matériau 21 et en un quatrième matériau 22. Le troisième matériau 21 a un troisième indice de réfraction n₃. Le quatrième matériau 22 a un quatrième indice de réfraction n₄, différent du troisième indice de réfraction. L'écart entre le troisième indice de réfraction n₃ et le quatrième indice de réfraction n₄ est de préférence supérieur ou égal à 0.3.

Dans cet exemple, le troisième matériau 21 est identique au premier matériau 11. Le quatrième matériau 22 est identique au deuxième matériau 12.

De préférence, la source de lumière 2 est disposée à une distance de la cavité résonante 9 telle que l'onde lumineuse incidente 3 parvient au réflecteur supérieur 15 sous la forme d'ondes planes ou pouvant être considérées comme telles. Les couches minces formant le réflecteur supérieur 15 et le réflecteur inférieur 25 s'étendent perpendiculairement à l'axe de propagation Z. Ainsi, l'onde lumineuse incidente 3 se propage vers la cavité résonante 9 selon une incidence normale. La distance entre la source de lumière 2 et le réflecteur supérieur 15 est de préférence supérieure à 1 cm. Elle est de préférence comprise entre 2 et 30 cm.

Le capteur d'image 30 est apte à former une image selon un plan de détection P_{D}. Le capteur d'image peut alors être un photodétecteur matriciel comportant une matrice de pixels, de type CCD ou CMOS, ou un bolomètre. Le plan de détection P_{D} s'étend dans cet exemple perpendiculairement à l'axe de propagation Z de l'onde lumineuse incidente 3. Un processeur 62, par exemple un microprocesseur, peut être programmé pour traiter des images formées par le capteur d'image 30, en appliquant par exemple des algorithmes de reconstruction holographique. Les instructions correspondant à des algorithmes sont stockées dans une mémoire 64 reliée au processeur.

En l'absence d'échantillon dans l'espace 8 s'étendant entre le réflecteur supérieur 15 et le réflecteur inférieur 25, lorsqu'une onde lumineuse incidente 3 est émise par la source de lumière 2, l'onde lumineuse se propage à travers le support supérieur 10, puis subit de multiples réflexions, formant des ondes réfléchies 4 entre le réflecteur supérieur 15 et le réflecteur inférieur 25. Il en résulte une amplification de l'intensité de l'onde lumineuse qui se propage dans la cavité optique 9. La cavité optique 9 transmet une onde lumineuse 5 vers le capteur d'image 30, l'onde lumineuse transmise 5 résultant de l'amplification de l'onde lumineuse d'émission 3 par la cavité optique. Cependant, l'effet d'amplification ne se produit qu'à une longueur d'onde de résonance. Ainsi, l'intensité de l'onde lumineuse transmise 5 dépend de la longueur d'onde d'émission λ. La figure 1B représente un spectre de transmission de la cavité optique 9. Ce spectre montre l'évolution de la transmission (axe des ordonnées) en fonction de la longueur d'onde (axe des abscisses). On observe que le spectre comporte des longueurs d'onde de résonance, auxquelles la transmission est maximale. En dehors des longueurs d'onde de résonance, l'intensité de l'onde transmise diminue, et peut être négligeable.

La longueur d'onde d'émission λ émise par la source de lumière correspond à une longueur d'onde de résonance "à vide" de la cavité résonante 9 formée par le réflecteur supérieur 15 et le réflecteur inférieur 25, en l'absence d'échantillon disposé dans la cavité résonante. La longueur d'onde de résonance à vide peut être par exemple voisine de 405 nm. La figure 1C est le résultat d'une simulation de la propagation du champ électromagnétique à travers la cavité résonante 9. Les niveaux de gris correspondent à l'intensité du champ électrique. La figure est représentée selon un plan XZ tel que défini sur la figure 1A. On observe que l'amplitude du champ électromagnétique, entre les deux réflecteurs 15 et 25, est élevée, ce qui traduit l'effet d'amplification du champ électromagnétique dans la cavité résonante 9, à la longueur d'onde de résonance.

Lorsqu'une particule, de taille comparable à la longueur d'onde, est présente dans la cavité optique 9, dans l'espace 8 s'étendant entre le réflecteur supérieur 15 et le réflecteur inférieur 25, la longueur d'onde de résonance de la cavité optique 9 est modifiée et ne correspond plus à la longueur d'onde d'émission, cette dernière correspondant à la longueur d'onde de résonance à vide de la cavité optique 9. Ainsi, la présence de particules dans la cavité résonante conduit à un désaccord de la cavité optique 9. Cela conduit à une réduction de l'intensité de l'onde lumineuse transmise 5.

Ainsi, en l'absence d'échantillon, le capteur d'image 30 détecte une onde lumineuse 5 intense, formant un signal de fond relativement homogène. En présence d'un échantillon comportant des particules 6, le signal de fond, détecté par le capteur d'image, présente une intensité réduite. Une partie de l'onde lumineuse incidente 3, ou des ondes réfléchies 4, est diffusée par la particule, formant une onde de diffusion 5'. Cette dernière n'est pas une onde plane. Elle n'est donc pas réfléchie par le réflecteur inférieur 25, ou de manière négligeable. En effet, le réflecteur inférieur 25 est dimensionné pour réfléchir une onde lumineuse se propageant selon une incidence normale, ce qui n'est pas le cas de l'onde diffusée 5'. Cette dernière n'est pas (ou est peu) réfléchie et se propage vers le capteur d'image 30.

Ainsi, sous l'effet de la présence d'une particule 6 dans la cavité optique 9, le capteur d'image 30 est exposé à une onde d'exposition 5" formée :
- d'une part par une onde transmise 5, relativement homogène et d'intensité plus faible qu'en l'absence de particule ;
- d'autre part par une onde de diffusion 5' correspondant à la diffusion, par la particule, de l'onde lumineuse incidente 3, ou d'ondes réfléchies 4.

L'image formée sur le capteur d'image 30 comporte une figure de diffraction, ou hologramme, correspondant à l'évolution spatiale de l'onde lumineuse d'exposition dans le plan de détection P_{D}.

On a comparé, par simulations, la propagation de la lumière à travers un dispositif de l'art antérieur, dans lequel l'échantillon est disposé sur une simple lame de verre, face à un capteur d'image, et un dispositif selon le premier mode de réalisation. Les propriétés de propagation de la lumière dans des réflecteurs de type miroirs de Bragg ou réseaux de diffraction sont aisément modélisées, par l'homme du métier, sur la base des équations spatio-temporelles de Maxwell. Dans la suite de cette description, les modélisations sont réalisées en mettant en oeuvre une méthode de type FDTD signifiant « Finite Différence Time Domain Element Method».

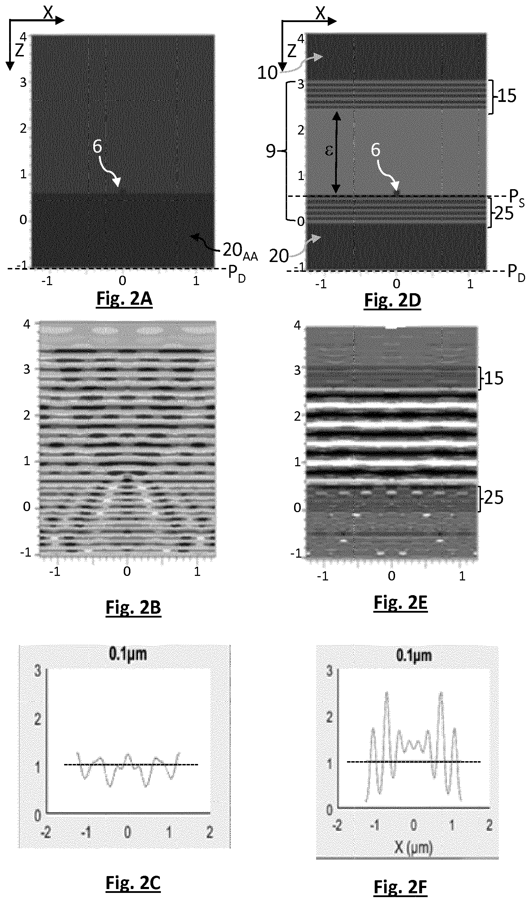

La figure 2A correspond au dispositif de l'art antérieur modélisé. Une particule 6, dont la taille est un paramètre de la simulation, est déposée sur une lame de verre 20_{AA}. La figure 2D correspond au modèle du dispositif selon le premier mode de réalisation. Chaque miroir de Bragg est formé 5 paires de couches minces SiO₂/ Si₃N₄. Le réflecteur inférieur 25 et le réflecteur supérieur 15 sont espacés d'une distance de 2 µm. Une particule 6 est déposée sur un support inférieur 20, ce dernier formant, avec un support supérieur 10, une cavité optique résonante 9.

Dans cet exemple, la particule est modélisée sous la forme d'un cube de côté 0.1 µm. Les figures 2A et 2D sont représentées dans un plan XZ tel que défini sur la figure 1A. Les dimensions mentionnées sur les axes sont exprimées en microns (µm). Le plan de détection P_{D} est représenté sur les figures 2A et 2D. Il s'étend perpendiculairement à l'axe Z, à une coordonnée z = -1µm. La particule 6 présente un indice de réfraction de 1,5. Elle est disposée dans un espace 8 dont l'indice de réfraction est égal à 1 (air).

Les figures 2B et 2E montrent respectivement l'intensité du champ électrique dans le plan XZ. Ces figures sont représentatives de l'amplification du champ électromagnétique dans la cavité 9 (cf. figure 2E).

Les figures 2C et 2F sont des simulations de l'intensité de l'onde lumineuse parvenant au plan de détection (axes des ordonnées), en fonction de l'axe X (axes des abscisses). Ces deux figures correspondent à un profil, selon l'axe X, de la figure de diffraction correspondant à la particule 6 observée. Sur les figures 2C et 2F, on a représenté, par une ligne en pointillés, l'intensité d'une onde lumineuse détectée en l'absence de particule. On observe qu'en mettant en oeuvre l'invention (figure 2F), on obtient une figure de diffraction nettement plus contrastée qu'en mettant en oeuvre l'art antérieur (figure 2C).

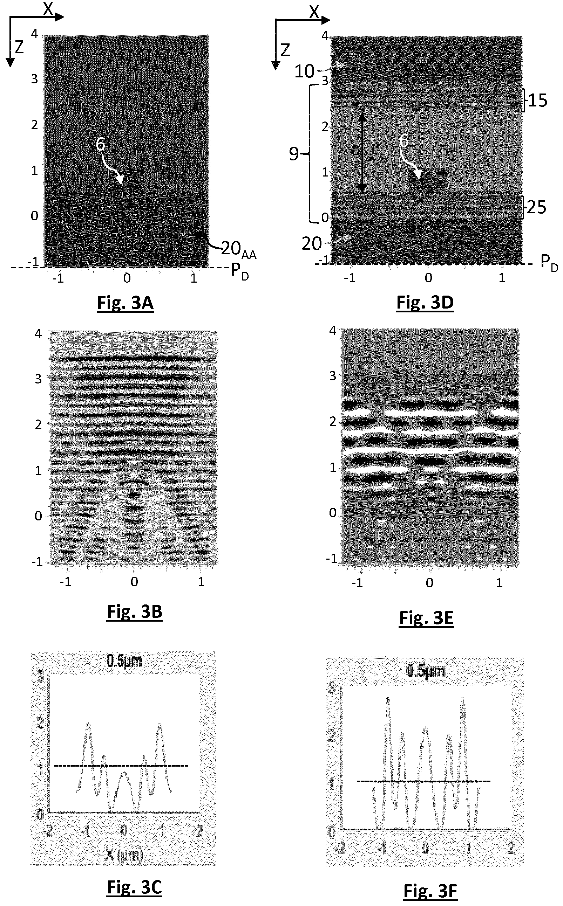

Des simulations analogues ont été effectuées en considérant différentes tailles de la particule. Sur les figures 3A à 3F, on a représenté des simulations de la détection d'une particule cubique de côté 0.5 µm. Les figures 3A et 3D représentent chaque configuration modélisée : sur la figure 3A, la particule est disposée sur une lame de verre 20_{AA}, selon l'art antérieur. Sur la figure 3D, la particule est disposée dans une cavité optique telle que précédemment décrite. Les figures 3B et 3E montrent respectivement l'intensité du champ électrique dans le plan XZ. On observe l'amplification du champ électromagnétique dans la cavité 9 (cf. figure 3E), cette amplification étant toutefois amoindrie par rapport à celle observée sur la figure 2E.

Les figures 3C et 3F sont des simulations de l'intensité de l'onde lumineuse parvenant au plan de détection (axes des ordonnées), en fonction de l'axe X (axes des abscisses). Ces deux figures correspondent à un profil, selon l'axe X, de la figure de diffusion correspondant à la particule 6. Sur les figures 3C et 3F, on a représenté, par une ligne en pointillés, l'intensité d'une onde lumineuse détectée en l'absence de particule. On observe à nouveau qu'en mettant en oeuvre l'invention (figure 3F), on obtient une figure de diffraction nettement plus contrastée qu'en mettant en oeuvre l'art antérieur (figure 3C).

Les figures 2A à 2F et 3A à 3F montrent que l'invention permet d'obtenir des figures de diffraction plus contrastées que l'art antérieur. En se basant sur ces simulations, on a estimé qu'il est possible de détecter une particule dont la taille (ou la plus grande dimension) est de l'ordre de 0.1 µm, soit 100 nm. Cela correspond à la taille de certains virus.

Des simulations de figures de diffraction ont été réalisées en considérant différentes tailles de particules. Les paramètres de simulation étaient les suivants :
- taille de pixels du capteur d'image : 1,67 µm ;
- taille de l'image : 200 pixels par 200 pixels ;
- distance entre le plan de détection P_{D} et le plan de support P_{S} : 2000 µm ;
- longueur d'onde d'émission : 405 nm ;
- miroirs de Bragg : 5 paires de couches minces SiO₂/Si₃N₄.

Le bruit du capteur d'image a été simulé en ajoutant un bruit aléatoire. Les effets de la cohérence de la source ont été pris en compte en appliquant un filtrage gaussien aux images simulées.

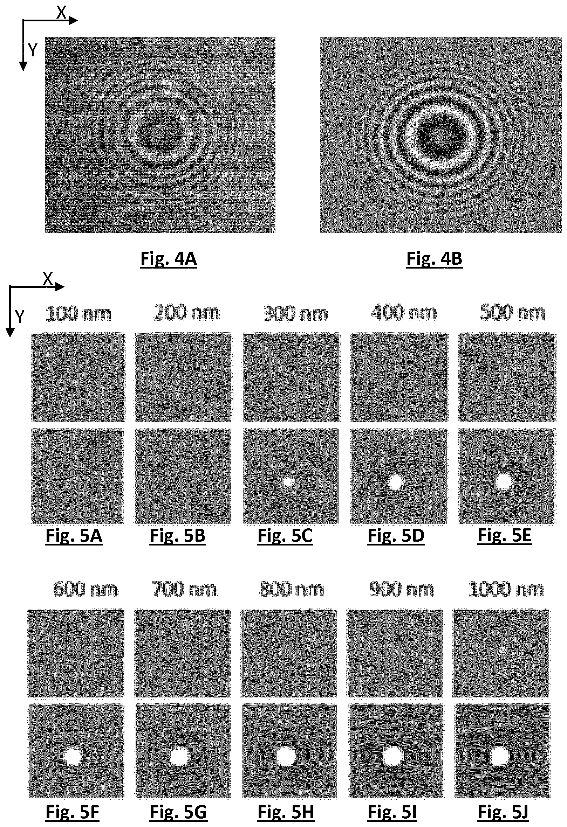

Les figures 4A et 4B représentent respectivement une figure de diffraction acquise et une figure de diffraction modélisée en disposant une bille de polystyrène (n = 1.6) de diamètre 1 µm sur une lame de verre. La comparaison des figures permet de valider l'algorithme de simulation de la figure de diffraction.

Les figures 5A à 5J représentent des images obtenues en appliquant un algorithme de reconstruction holographique à des figures de diffraction simulées, en considérant respectivement des billes dont le diamètre évolue entre 100 nm (figure 5A) à 1000 nm (figure 5J) par pas de 100 nm. La taille de la particule, en nm est indiquée sur chaque figure. La reconstruction holographique a été mise en oeuvre selon un procédé de reconstruction tel que décrit dans le document WO2017162985. Selon des principes connus, l'algorithme de reconstruction holographique permet d'obtenir une expression complexe A_{z}(x,y) de l'onde lumineuse d'exposition 5", dans un plan de reconstruction, en l'occurrence le plan du support P_{S}. Les coordonnées (x,y) sont des coordonnées de chaque pixel dans le plan reconstruction, perpendiculairement à l'axe de propagation Z. On rappelle que l'onde lumineuse d'exposition 5" est l'onde lumineuse à laquelle est exposé le capteur d'image 30. Elle est constituée de l'onde lumineuse transmise 5 et de l'onde lumineuse 5' diffractée par la particule.

L'expression complexe de l'onde lumineuse d'exposition A_{z}(x,y), dans les différentes coordonnées (x,y) dans le plan de reconstruction, forme une image complexe A_{z} de l'onde lumineuse d'exposition. En déterminant le module de l'image complexe A_{z}, on a obtenu les figures 5A à 5J.

Sur chacune de ces figures, la première ligne correspond à une image obtenue en considérant une configuration de l'art antérieur, selon laquelle la bille est disposée sur une lame de verre. La deuxième ligne correspond à une mise en oeuvre de l'invention, la bille étant disposés sur le plan de support Pₛ précédemment décrit.

Selon la configuration de l'art antérieur (première ligne des figures 5A à 5J), la bille est considérée comme détectée lorsque sa taille dépasse 500 nm, ce qui correspond à la figure 5E. En mettant en oeuvre l'invention, la bille est considérée comme détectée dès que sa taille dépasse 200 nm. Le critère de détection correspond à l'obtention d'un rapport signal sur bruit supérieur à 2.5. Sur les reconstructions des images simulées en mettant en oeuvre l'invention (deuxième ligne des figures 5A à 5J), un bruit de reconstruction apparaît, se traduisant par des artéfacts alignés respectivement selon les axes X et Y.

A partir des images reconstruites représentées sur les figures 5A à 5J, on a calculé, pour chaque taille de bille, un ratio entre :
- le rapport signal à bruit de l'image obtenue en mettant en oeuvre l'invention;
- et le rapport signal sur bruit de l'image obtenue selon la configuration de l'art antérieur.

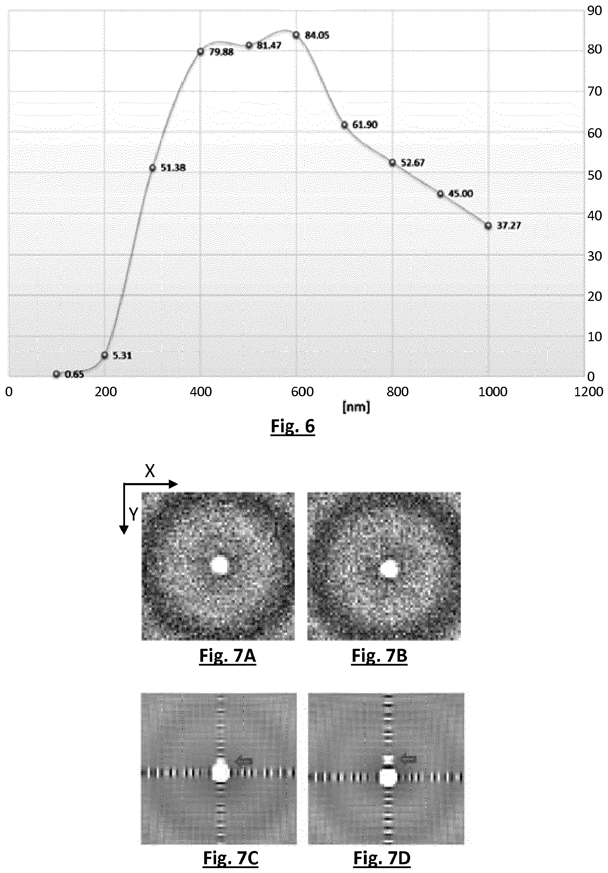

La figure 6 montre une évolution du ratio calculé (axe des ordonnées) en fonction de la taille de la bille (axe des abscisses), exprimée en nanomètre. Quelle que soit la taille de la bille, l'invention permet un gain significatif en termes de rapport signal sur bruit. Cela traduit une meilleure sensibilité.

Les figures 7A à 7D sont des essais visant à appréhender le gain en résolution spatiale conféré par l'invention. On a simulé la présence de deux billes : une grande bille, de diamètre 1µm et une petite bille, de diamètre 300 nm. La grande bille occupe le centre du champ observé. Le dispositif mis en oeuvre est identique à celui décrit en lien avec les figures 5A à 5J. On a réalisé différentes simulations, en éloignant progressivement la petite bille de la grande bille, selon l'axe Y. Les figures 7A et 7C correspondent respectivement des images reconstruites, à partir d'une figure de diffraction simulée selon un dispositif de l'art antérieur (billes disposées sur une lame de verre) et selon l'invention. Le plan de reconstruction correspondant au plan de support P_{S}. Sur ces figures, la distance entre la grande bille et la petite bille est de 4 pixels. De même que dans les essais décrits en lien avec les figures 5A à 5J, l'image reconstruite correspond à une image du module de l'image complexe obtenue, dans le plan de reconstruction, en appliquant un algorithme de reconstruction holographique tel que décrit dans WO2017162985.

On observe que lorsque les deux billes sont distantes, centre à centre, de 4 pixels, elles ne peuvent pas être séparées selon l'art antérieur (figure 7A) tandis qu'on est en limite de résolution lorsqu'on met en oeuvre l'invention (figure 7C).

Les figures 7B et 7D correspondent à des images reconstruites à partir de figures de diffraction respectivement simulées en mettant en oeuvre un dispositif de l'art antérieur et l'invention. Sur ces figures, la distance entre la grande bille et la petite bille est de 8 pixels. Les billes peuvent être séparées sur la figure 7D, tandis qu'elles ne sont pas séparées sur la figure 7B.

Les figures 7A à 7D traduisent le gain en résolution spatiale conféré par l'invention.

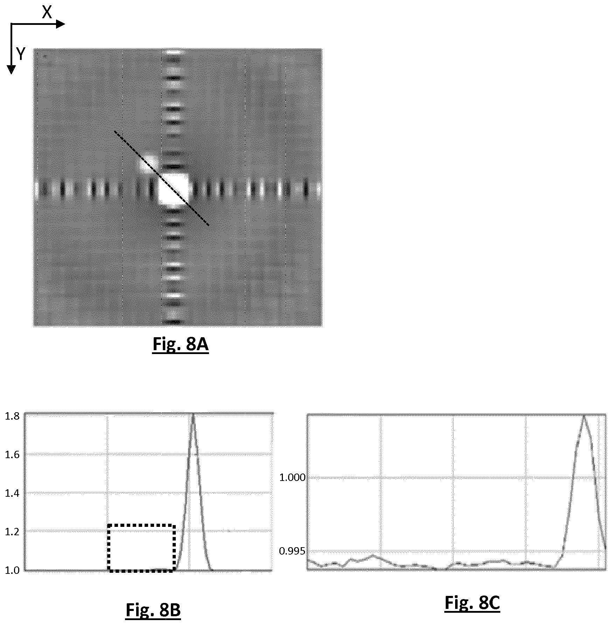

La figure 8A est une image reconstruite à partir d'une figure de diffraction simulée en mettant en oeuvre l'invention. Sur ces figures, la distance entre la grande bille et la petite bille est de 8 pixels, les deux billes étant décalées selon la diagonale. La figure 8B est un profil d'intensité de la figure 8A selon l'axe représenté en pointillés sur cette dernière. La figure 8C est un détail du profil, correspondant à une région d'intérêt encadrée sur la figure 8B. A partir de ces profils, on a calculé les rapports signal sur bruit correspondant respectivement à la bille de diamètre 1 µm et à la bille de diamètre 300 nm. Ils sont respectivement estimés à 1432 et 17.

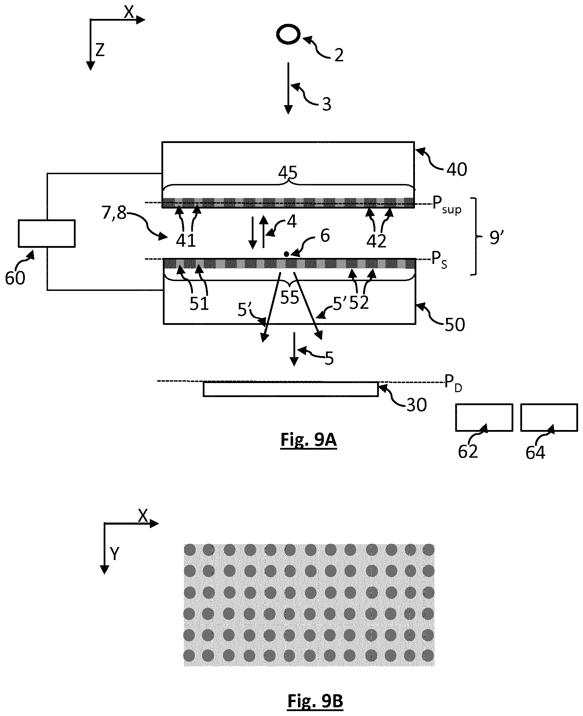

La figure 9A illustre un deuxième mode de réalisation de l'invention. Le dispositif comporte les mêmes composants que le dispositif représenté sur la figure 1A. Une source de lumière 2 émet une onde incidente 3 vers un échantillon 7 comportant une particule 6. L'échantillon 7 s'étend dans un espace 8 d'une cavité optique résonante 9'. La cavité optique résonante 9' s'étend entre un réflecteur supérieur 45, maintenu par un support supérieur 40 et un réflecteur inférieur 55, maintenu par un support inférieur 50.

Le support supérieur 40 comporte un réflecteur supérieur 45. Le réflecteur supérieur est constitué d'une alternance de deux matériaux 41,42 d'indices de réfraction différents. Le réflecteur supérieur 40 permet une modulation spatiale de l'indice de réfraction. Dans le premier mode de réalisation, représenté sur la figure 1A, la modulation spatiale de l'indice de réfraction est réalisée parallèlement à l'axe de propagation Z. Selon le deuxième mode de réalisation, la modulation spatiale de l'indice de réfraction est réalisée dans le plan XY perpendiculaire à l'axe de propagation.

Le réflecteur supérieur 45 est formé d'un réseau de diffraction supérieur, tel que décrit dans EP3147646. Le réseau de diffraction supérieur est formé dans une couche mince supérieure d'un premier matériau 41, en l'occurrence SiO₂. La couche mince supérieure, s'étendant perpendiculairement à l'axe de propagation Z, comporte des inclusions selon un deuxième matériau 42, formant un motif dans cette dernière. Les inclusions peuvent être agencées en définissant un motif périodique, comme représenté sur la figure 9B. Cette figure représente une coupe du réseau de diffraction supérieur dans un plan Pₛᵤₚ représenté sur la figure 9A. Chaque inclusion prend la forme d'un cylindre, dont la base, dans le plan de la couche mince supérieure, est circulaire ou polygonale, le cylindre s'étendant parallèlement à l'axe de propagation Z. Chaque inclusion peut également prendre la forme d'un cône ou un tronc conique, de base circulaire ou polygonale, ou avoir une forme hémisphérique.

Quelle que soit la forme retenue, la dimension de chaque inclusion est micrométrique, par exemple comprise entre 1 µm et 10 µm, ou nanométrique, c'est-à-dire comprise entre 100 nm ou 200 nm et 1 µm. De préférence selon le plan XY, la plus grande dimension de chaque inclusion est inférieure à la longueur d'onde λ. On parle de dimension « sub-longueur d'onde ». Dans l'exemple représenté, les inclusions sont réparties selon un agencement matriciel régulier. Elles définissent un réseau, dit réseau de diffraction dit bidimensionnel, s'étendant dans la couche mince supérieure. Par réseau de diffraction bidimensionnel, on entend un réseau comportant des inclusions distribuées périodiquement selon deux directions X et Y, notamment orthogonales, dans un plan perpendiculaire à l'axe de propagation.

Le support inférieur 50 comporte un réflecteur inférieur 55, prenant la forme d'un réseau de diffraction ménagé dans une couche mince inférieure formée d'un troisième matériau 51. Dans cet exemple, le troisième matériau 51 est identique au premier matériau 41. Il s'agit d'oxyde de silicium. De même que dans le réflecteur supérieur 45, le réseau de diffraction est formé par des inclusions, dans la couche mince inférieure, d'un quatrième matériau 52, dont l'indice de réfraction est différent de celui du troisième matériau 51. Dans cet exemple, le quatrième matériau 52 est identique au deuxième matériau 42. Il s'agit de nitrure de silicium.

Les réflecteurs supérieur et inférieur, comportant un réseau de diffraction bidimensionnel s'étendent perpendiculairement à l'axe de propagation Z. Ils permettent d'obtenir une cavité optique résonante 9' particulièrement compacte et efficace.

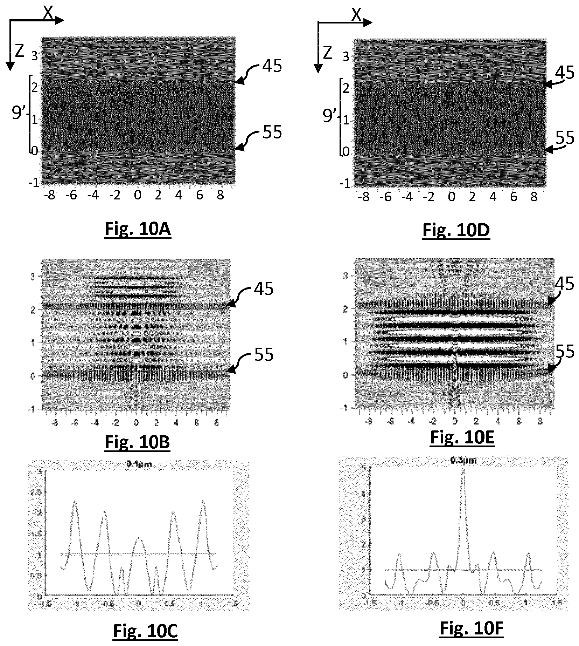

Des modélisations du dispositif représenté sur la figure 9A ont été effectuées, et sont décrites en lien avec les figures 10A à 10F. Sur les figures 10A et 10D, on a représenté une particule 6, respectivement de diamètre 0.1 µm et 0.3 µm, la particule étant disposée sur un plan de support P_{S} défini par le support inférieur 50 d'un dispositif selon le deuxième mode de réalisation. Les figures 10B et 10E montrent l'intensité du champ électrique, selon le plan XZ, dans la cavité résonante 9', respectivement avec une particule de diamètre 0.1 µm et 0.3 µm. On observe l'amplification du champ électromagnétique dans la cavité 9'. Les figures 10C et 10F sont des simulations de l'intensité de l'onde lumineuse parvenant au plan de détection (axes des ordonnées), en fonction de l'axe X (axes des abscisses). Ces deux figures correspondent à un profil, selon l'axe X, de la figure de diffusion correspondant à la particule. Sur les figures 10C et 10F, on a représenté, par une ligne en pointillés, l'intensité d'une onde lumineuse détectée en l'absence de particule. Les profils sont contrastés, ce qui témoigne d'une détection de la particule dans chaque cas de figure. Le profil obtenu avec la particule de diamètre 0.3 µm (cf. figure 10F) montre que ce mode de réalisation est encore plus sensible que le premier mode de réalisation, dans lequel les réflecteurs sont des miroirs de Bragg.

Selon une variante des modes de réalisation précédemment décrit, le réflecteur supérieur 15 est un miroir de Bragg, tandis que le réflecteur inférieur 25 comporte un réseau de diffraction. Inversement, le réflecteur supérieur 15 peut comporter un réseau de diffraction, tandis que le réflecteur inférieur 25 est un miroir de Bragg.

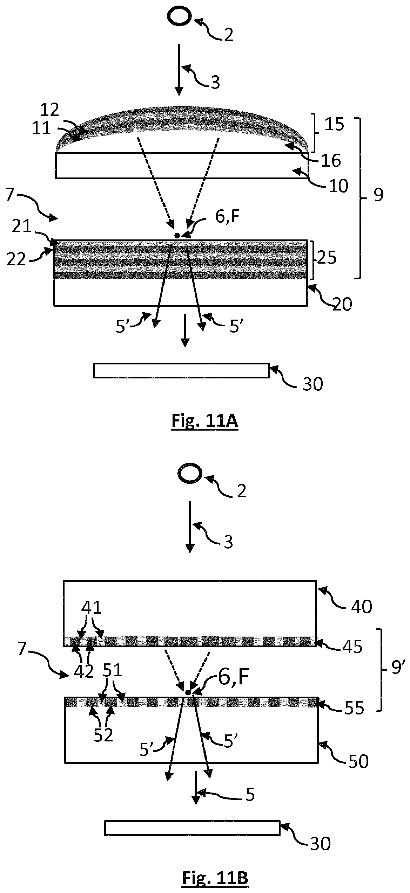

La figure 11A montre un troisième mode de réalisation. Selon ce mode de réalisation, le dispositif comporte une cavité résonante 9 s'étendant entre un réflecteur supérieur 15 et un réflecteur inférieur 25, les réflecteurs étant des miroirs de Bragg, comme décrit en lien avec le premier mode de réalisation. Le troisième mode de réalisation est une variante du premier mode de réalisation, représenté sur la figure 1A. Le support supérieur 10 comporte une lentille convergente 16, réalisée selon un matériau transparent à la longueur d'onde λ, par exemple en verre si la longueur d'onde λ est dans le domaine spectral visible ou dans l'infra-rouge court. Si la longueur d'onde λ est dans le domaine du moyen infra-rouge ou du long infra-rouge, le matériau transparent peut être du germanium. La lentille convergente permet une focalisation de l'onde lumineuse incidente 3 vers un point de focalisation F situé dans l'espace 8 s'étendant entre le réflecteur inférieur 25 et le réflecteur supérieur 15. La lentille convergente 16 est une lentille plan-concave. Elle comporte une surface courbe, ce qui permet la focalisation de l'onde lumineuse incidente 3 vers le point de focalisation F. Le réflecteur supérieur 15 s'étend parallèlement à la lentille convergente 16. Ainsi, chaque couche mince formant le miroir de Bragg supérieur présente une courbure parallèle à la courbure de la lentille convergente 16.

Selon ce mode de réalisation, le support inférieur 20 est similaire à celui décrit en lien avec la figure 1A. Il comporte un réflecteur inférieur 25 formé par un miroir de Bragg, dont chaque couche mince s'étend perpendiculairement à l'axe de propagation Z de l'onde incidente 3.

Selon ce mode de réalisation, le miroir de Bragg supérieur 15 agit en permettant une réflexion de l'onde lumineuse se propageant dans la cavité, tout en focalisant l'onde réfléchie vers le point focal F. La focalisation est schématisée par des flèches en pointillés.

Le point focal F peut être disposé sur une face du support inférieur 20, formant un plan support P_{S}. Dans ce cas, lorsqu'une particule 6 est disposée sur le plan focal, le dispositif permet une concentration de l'onde lumineuse sur la particule 6. Cela permet d'améliorer la sensibilité de détection.

Le support supérieur 10 peut être déplacé, selon l'axe X, et/ou selon l'axe Y, de façon à pouvoir adresser successivement différents points de focalisation. Ainsi, on peut obtenir une image de différentes particules 6 présentes dans l'échantillon 7 en effectuant un balayage du support supérieur 10 selon l'axe latéral X et/ou l'axe Y, c'est-à-dire un balayage du support perpendiculairement à l'axe de propagation.

La figure 11B illustre un quatrième mode de réalisation, qui constitue une variante du deuxième mode de réalisation décrit en lien avec la figure 9A. Selon ce mode de réalisation, le dispositif comporte une cavité résonante 9' s'étendant entre un réflecteur supérieur 45 et un réflecteur inférieur 55, les réflecteurs étant des réseaux de diffraction bidimensionnels, comme décrit en lien avec le deuxième mode de réalisation. Le réflecteur supérieur 15 comporte un réseau de diffraction permettant une focalisation de l'onde lumineuse incidente 3 vers un point de focalisation F situé dans l'espace 8 s'étendant entre le réflecteur inférieur 55 et le réflecteur supérieur 45. La focalisation est schématisée par des flèches en pointillés. Le motif du réseau de diffraction, formant le réflecteur supérieur 45, est défini selon un gradient. Ainsi, les inclusions du deuxième matériau 42 dans la couche mince du premier matériau 41 sont distribuées en prenant en compte un facteur d'échelle. Les inclusions du deuxième matériau 42, dont l'indice de réfraction est le plus élevé que le premier matériau, ont un côté de largeur maximale au niveau d'une partie centrale du réflecteur supérieur 45. La largeur de chaque côté diminue au fur et à mesure que l'inclusion est éloignée de la partie centrale du réflecteur supérieur 45. La diminution de la largeur de chaque côté peut dépendre, par une relation quadratique, de la distance par rapport à la partie centrale du réflecteur supérieur. Le réflecteur inférieur 55 est similaire à celui décrit en lien avec le deuxième mode de réalisation. Il est formé d'un réseau de diffraction bidimensionnel périodique, tel que schématisé sur les figures 9A et 9B.

De même que dans le troisième mode de réalisation, le support supérieur 45 peut être déplacé, notamment latéralement, selon l'axe X, de façon à pouvoir adresser successivement différents points de focalisation. Ainsi, on peut obtenir une image de différentes particules présentes dans l'échantillon 7 en effectuant un balayage du support supérieur 45 selon l'axe latéral X ou l'axe Y.

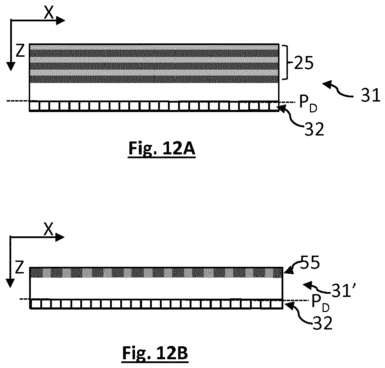

Dans les modes de réalisation qui précèdent, le capteur d'image 30 est représenté en étant distinct du support inférieur 20, 50. Selon une variante de l'ensemble de ces modes de réalisation, le capteur d'image peut être intégré au support inférieur, de façon à être solidaire du réflecteur inférieur. On a représenté, sur la figure 12A, un capteur d'image 31, comportant une matrice de pixels 32 définissant un plan de détection P_{D}. Le capteur d'image 31 comporte un réflecteur 25, prenant la forme d'un miroir de Bragg, comme précédemment décrit. Les couches minces formant le miroir de Bragg sont formées en dessus des pixels. Elles sont ainsi intégrées dans le capteur d'image 31. On obtient ainsi un composant unique assurant à la fois la réflexion de l'onde lumineuse incidente dans la cavité optique résonante 9, et la détection de l'onde lumineuse 5" émanant de la cavité résonante.

La figure 12B montre un capteur d'image 31' comportant une matrice de pixels 32 définissant un plan de détection P_{D}. Le capteur d'image 31' comporte un réflecteur 55, prenant la forme d'un réseau de diffraction, tel que décrit en lien avec le deuxième mode de réalisation (cf. figures 9A et 9B). Le réseau de diffraction est directement formé en dessus sur les pixels.

Les capteurs d'image représentés sur les figures 12A et 12B sont particulièrement appropriés à une mise en oeuvre de l'invention.

L'invention pourra s'appliquer à la détection de particules, et en particulier de particules submicroniques, dont la taille, où la plus grande dimension, est inférieure à 1 µm. Elle s'applique en particulier à la détection de cellules, des virus, ou des microorganismes baignant dans un liquide. L'invention pourra être mise en oeuvre pour effectuer un comptage de particules, ou une identification de cette dernière. Les figures de diffraction formées en mettant en oeuvre l'invention peuvent être traitées en mettant en oeuvre des algorithmes de reconstruction holographique connus, permettant d'obtenir des images exploitables des particules observées.

## Revendications

1. Procédé de formation d'une image d'au moins une particule (6), disposée dans un échantillon (7), à l'aide d'un dispositif comportant :
- une source de lumière (2), apte à émettre une onde lumineuse (3), dite onde incidente, à une longueur d'onde d'émission (λ), selon un axe de propagation (Z), vers l'échantillon ;
- un capteur d'image (30) ;
- un support (20), disposé entre la source de lumière (2) et le capteur d'image (30), le support définissant un plan de support (Ps), le support (20) étant transparent à la longueur d'onde d'émission et comportant un réflecteur inférieur (25,55), formé d'au moins deux matériaux (21, 22) ayant des indices de réfraction différents, à la longueur d'onde d'émission, le réflecteur inférieur s'étendant entre le plan de support et le capteur d'image;
- un réflecteur supérieur (15, 45), formé d'au moins deux matériaux ayant des indices de réfraction différents (11, 12), à la longueur d'onde d'émission, le réflecteur supérieur s'étendant entre le plan de support (P_{S}) et la source de lumière (2), le réflecteur supérieur (15,45) étant disposé face au réflecteur inférieur (25,55), de façon à former une cavité optique résonante (9, 9');
- un espace libre (8) entre le réflecteur supérieur et le support ;
- aucune optique de formation d'image n'étant disposée entre l'échantillon et le capteur d'image ;
le procédé comportant les étapes suivantes :
- disposition de l'échantillon (7) dans l'espace libre ;
- émission, par la source de lumière, d'une onde lumineuse (3), l'onde lumineuse se propageant, à travers le réflecteur supérieur (15), vers l'échantillon, puis subissant de multiples réflexions résonantes dans la cavité résonante (9) résultant en une amplification de l'onde lumineuse se propageant dans la cavité optique ;
- sous l'effet de la présence de la particule (6) dans l'échantillon :
o diffusion, par la particule, d'une partie de l'onde lumineuse se propageant dans la cavité résonante, à travers le support (20), pour former une onde de diffusion (5') se propageant vers le capteur d'image ;
o transmission d'une partie de l'onde lumineuse se propageant dans la cavité résonante vers le capteur d'image ;
- acquisition, par le capteur d'image, d'une image, l'image comportant un hologramme, permettant au moins une localisation de la particule.

2. Procédé selon la revendication 1, comportant une application d'un algorithme de reconstruction holographique à l'image acquise par le capteur d'image (30).

3. Procédé selon l'une quelconque des revendications précédentes, dans lequel le réflecteur inférieur (25) comporte un miroir de Bragg, dit miroir de Bragg inférieur, comportant une alternance périodique de couches minces formées par au moins deux matériaux ayant des indices de réfraction différents (21, 22).

4. Procédé selon la revendication 3, dans lequel les couches minces formant le miroir de Bragg inférieur s'étendent perpendiculairement à l'axe de propagation (Z).

5. Procédé selon l'une quelconque des revendications précédentes, dans lequel le réflecteur supérieur (15) comporte un miroir de Bragg, dit miroir de Bragg supérieur, comportant une alternance périodique de couches minces, formées par au moins deux matériaux ayant des indices de réfraction différents (11, 12).

6. Procédé selon la revendication 5, dans lequel les couches minces formant le miroir de Bragg supérieur s'étendent perpendiculairement à l'axe de propagation (Z).

7. Procédé selon la revendication 5, comportant une lentille convergente (16), disposée entre le plan de support (P_{S}) et la source de lumière, la lentille convergente étant agencée pour faire converger l'onde lumineuse incidente (3) vers un point de focalisation (F) situé dans la cavité (9), le dispositif étant tel que les couches minces (11,12) formant le miroir de Bragg supérieur s'étendant parallèlement à la lentille convergente.

8. Procédé selon l'une quelconque des revendications précédentes dans lequel le réflecteur inférieur (55) comporte un réseau de diffraction, dit réseau de diffraction inférieur, ménagé dans une première couche mince, et formant, dans cette dernière, un premier motif périodique.

9. Procédé selon la revendication 8, dans lequel le réflecteur supérieur (45) comporte un réseau de diffraction, dit réseau de diffraction supérieur, ménagé dans une deuxième couche mince, et formant, dans cette dernière, un deuxième motif.

10. Procédé selon la revendication 9, dans lequel le réflecteur supérieur (45), est agencé pour faire converger l'onde lumineuse incidente (3) vers un point de focalisation (F) situé dans la cavité (9).

11. Procédé selon l'une quelconque des revendications précédentes, dans lequel le réflecteur inférieur (25, 55) et le réflecteur supérieur (15, 45) comportent chacun deux matériaux présentant un écart d'indice de réfraction supérieur ou égal à 0,3.

12. Procédé selon la revendication 11, dans lequel le réflecteur inférieur (25, 55) et/ou le réflecteur supérieur (15, 45) est formé à partir des couples de matériaux suivants :
- silice et nitrure de silicium ;
- silice et oxyde de titane ;
- silice et silicium amorphe ;
- germanium et sulfure de zinc.

13. Procédé selon l'une quelconque des revendications 7 ou 10, le procédé comportant une focalisation, par le réflecteur supérieur (15), de l'onde lumineuse (3) émise par la source de lumière, sur la particule.

14. Procédé selon la revendication 13, comportant une illumination de l'échantillon selon différentes positions de la source de lumière (2) et du réflecteur supérieur (15), selon une direction (X,Y) perpendiculaire à l'axe de propagation (Z), à chaque position de la source de lumière correspondant un point de focalisation (F) de l'onde lumineuse émise par la source de lumière, le point de focalisation étant situé dans la cavité optique (9).

## Patentansprüche

1. Verfahren zum Erzeugen eines Bildes mindestens eines Teilchens (6), das in einer Probe (7) angeordnet ist, mithilfe einer Vorrichtung, umfassend:
- eine Lichtquelle (2), die geeignet ist, eine Lichtwelle (3), einfallende Welle genannt, mit einer Aussendungswellenlänge (λ) entlang einer Ausbreitungsachse (Z) zu der Probe hin auszusenden;
- einen Bildsensor (30);
- einen Träger (20), der zwischen der Lichtquelle (2) und dem Bildsensor (30) angeordnet ist, wobei der Träger eine Trägerebene (Ps) definiert, wobei der Träger (20) für die Aussendungswellenlänge durchlässig ist und einen unteren Reflektor (25, 55) umfasst, der aus mindestens zwei Materialien (21, 22) mit unterschiedlichen Brechungsindizes für die Aussendungswellenlänge gebildet wird, wobei sich der untere Reflektor zwischen der Trägerebene und dem Bildsensor erstreckt;
- einen oberen Reflektor (15, 45), der aus mindestens zwei Materialien mit unterschiedlichen Brechungsindizes (11, 12) für die Aussendungswellenlänge gebildet wird, wobei sich der obere Reflektor zwischen der Trägerebene (Ps) und der Lichtquelle (2) erstreckt, wobei der obere Reflektor (15, 45) gegenüber dem unteren Reflektor (25, 55) angeordnet ist, so dass ein optischer Resonanzhohlraum (9, 9') gebildet wird;
- einen freien Raum (8) zwischen dem oberen Reflektor und dem Träger;
- wobei keine Bilderzeugungsoptik zwischen der Probe und dem Bildsensor angeordnet ist;
wobei das Verfahren die folgenden Schritte umfasst:
- Anordnen der Probe (7) in dem freien Raum;
- Aussenden, durch die Lichtquelle, einer Lichtwelle (3), wobei sich die Lichtwelle durch den oberen Reflektor (15) hindurch zu der Probe hin ausbreitet, dann zahlreiche resonante Reflexionen in dem Resonanzhohlraum (9) erfährt, die zu einer Verstärkung der sich in dem optischen Hohlraum ausbreitenden Lichtwelle führen;
- unter der Wirkung des Vorhandenseins des Teilchens (6) in der Probe:
∘ Streuen, durch das Teilchen, eines Teils der sich in dem Resonanzhohlraum ausbreitenden Lichtwelle durch den Träger (20) hindurch, um eine Streuwelle (5') zu bilden, die sich zu dem Bildsensor hin ausbreitet;
∘ Übertragen eines Teils der sich in dem Resonanzhohlraum ausbreitenden Lichtwelle zu dem Bildsensor hin;
- Erfassen, durch den Bildsensor, eines Bildes, wobei das Bild ein Hologramm umfasst, das mindestens eine Lokalisierung des Teilchens ermöglicht.

2. Verfahren nach Anspruch 1, umfassend ein Anwenden eines Algorithmus zur holografischen Rekonstruktion auf das von dem Bildsensor (30) erfasste Bild.

3. Verfahren nach einem der vorhergehenden Ansprüche, bei dem der untere Reflektor (25) einen Bragg-Spiegel, unterer Bragg-Spiegel genannt, umfasst, der eine periodische Wechselfolge aus dünnen Schichten umfasst, die durch mindestens zwei Materialien mit unterschiedlichen Brechungsindizes (21, 22) gebildet werden.

4. Verfahren nach Anspruch 3, bei dem sich die den unteren Bragg-Spiegel bildenden dünnen Schichten senkrecht zu der Ausbreitungsachse (Z) erstrecken.

5. Verfahren nach einem der vorhergehenden Ansprüche, bei dem der obere Reflektor (15) einen Bragg-Spiegel, oberer Bragg-Spiegel genannt, umfasst, der eine periodische Wechselfolge aus dünnen Schichten umfasst, die durch mindestens zwei Materialien mit unterschiedlichen Brechungsindizes (11, 12) gebildet werden.

6. Verfahren nach Anspruch 5, bei dem sich die den oberen Bragg-Spiegel bildenden dünnen Schichten senkrecht zu der Ausbreitungsachse (Z) erstrecken.

7. Verfahren nach Anspruch 5, umfassend eine Sammellinse (16), die zwischen der Trägerebene (Ps) und der Lichtquelle angeordnet ist, wobei die Sammellinse dazu ausgebildet ist, die einfallende Lichtwelle (3) zu einem Brennpunkt (F) hin zu sammeln, der in dem Hohlraum (9) liegt, wobei die Vorrichtung dergestalt ist, dass sich die den oberen Bragg-Spiegel bildenden dünnen Schichten (11, 12) parallel zu der Sammellinse erstrecken.

8. Verfahren nach einem der vorhergehenden Ansprüche, bei dem der untere Reflektor (55) ein Beugungsgitter, unteres Beugungsgitter genannt, umfasst, das in einer ersten dünnen Schicht ausgebildet ist und in Letzterer ein erstes periodisches Muster bildet.

9. Verfahren nach Anspruch 8, bei dem der obere Reflektor (45) ein Beugungsgitter, oberes Beugungsgitter genannt, umfasst, das in einer zweiten dünnen Schicht ausgebildet ist und in Letzterer ein zweites Muster bildet.

10. Verfahren nach Anspruch 9, bei dem der obere Reflektor (45) dazu ausgebildet ist, die einfallende Lichtwelle (3) zu einem Brennpunkt (F) hin zu sammeln, der in dem Hohlraum (9) liegt.

11. Verfahren nach einem der vorhergehenden Ansprüche, bei dem der untere Reflektor (25, 55) und der obere Reflektor (15, 45) jeweils zwei Materialien umfassen, die eine Brechungsindexdifferenz von 0,3 oder mehr aufweisen.

12. Verfahren nach Anspruch 11, bei dem der untere Reflektor (25, 55) und/oder der obere Reflektor (15, 45) aus den folgenden Materialpaaren gebildet wird:
- Siliciumdioxid und Siliciumnitrid;
- Siliciumdioxid und Titanoxid;
- Siliciumdioxid und amorphes Silicium;
- Germanium und Zinksulfid.

13. Verfahren nach einem der Ansprüche 7 oder 10, wobei das Verfahren eine Fokussierung, durch den oberen Reflektor (15), der von der Lichtquelle ausgesendeten Lichtwelle (3) auf das Teilchen umfasst.

14. Verfahren nach Anspruch 13, umfassend ein Beleuchten der Probe gemäß unterschiedlichen Positionen der Lichtquelle (2) und des oberen Reflektors (15) gemäß einer Richtung (X,Y) senkrecht zu der Ausbreitungsachse (Z), wobei jeder Position der Lichtquelle ein Brennpunkt (F) der von der Lichtquelle ausgesendeten Lichtwelle entspricht, wobei der Brennpunkt in dem optischen Hohlraum (9) liegt.

## Claims

1. Method for forming an image of at least one particle (6), arranged in a sample (7), using a device comprising:
- a light source (2), which is able to emit a light wave (3), referred to as the incident wave, at an emission wavelength (λ), along a propagation axis (Z), towards the sample;
- an image sensor (30);
- a holder (20), arranged between the light source (2) and the image sensor (30), the holder defining a holder plane (Ps), the holder (20) being transparent to the emission wavelength and comprising a lower reflector (25, 55), formed from at least two materials (21, 22) having different refractive indices, at the emission wavelength, the lower reflector extending between the holder plane and the image sensor;
- an upper reflector (15, 45), formed from at least two materials having different refractive indices (11, 12), at the emission wavelength, the upper reflector extending between the holder plane (Ps) and the light source (2), the upper reflector (15, 45) being arranged facing the lower reflector (25, 55), so as to form a resonant optical cavity (9, 9');
- a free space (8) between the upper reflector and the holder;
- no image-forming optic being arranged between the sample and the image sensor;
the method comprising the following steps:
- arranging the sample (7) in the free space;
- the light source emitting a light wave (3), the light wave propagating, through the upper reflector (15), towards the sample, then undergoing multiple resonant reflections in the resonant cavity (9) resulting in an amplification of the light wave propagating in the optical cavity;
- under the effect of the presence of the particle (6) in the sample:
∘ the particle scattering part of the light wave propagating in the resonant cavity, through the holder (20), in order to form a scattered wave (5') propagating towards the image sensor;
∘ transmitting part of the light wave propagating in the resonant cavity towards the image sensor;
- the image sensor acquiring an image, the image comprising a hologram, making it possible at least to locate the particle.

2. Method according to Claim 1, comprising applying a holographic reconstruction algorithm to the image acquired by the image sensor (30).

3. Method according to either one of the preceding claims, in which the lower reflector (25) comprises a Bragg mirror, referred to as the lower Bragg mirror, comprising a periodic alternation of thin layers which are formed by at least two materials having different refractive indices (21, 22).

4. Method according to Claim 3, in which the thin layers forming the lower Bragg mirror extend perpendicular to the propagation axis (Z).

5. Method according to any one of the preceding claims, in which the upper reflector (15) comprises a Bragg mirror, referred to as the upper Bragg mirror, comprising a periodic alternation of thin layers, which are formed by at least two materials having different refractive indices (11, 12).

6. Method according to Claim 5, in which the thin layers forming the upper Bragg mirror extend perpendicular to the propagation axis (Z).

7. Method according to Claim 5, comprising a converging lens (16), arranged between the holder plane (Ps) and the light source, the converging lens being arranged to make the incident light wave (3) converge towards a focal point (F) located in the cavity (9), the device being such that the thin layers (11, 12) forming the upper Bragg mirror extend parallel to the converging lens.

8. Method according to any one of the preceding claims, in which the lower reflector (55) comprises a diffraction grating, referred to as the lower diffraction grating, made in a first thin layer, and forming, in the latter, a first, periodic pattern.

9. Method according to Claim 8, in which the upper reflector (45) comprises a diffraction grating, referred to as the upper diffraction grating, made in a second thin layer, and forming, in the latter, a second pattern.

10. Method according to Claim 9, in which the upper reflector (45) is arranged to make the incident light wave (3) converge towards a focal point (F) located in the cavity (9).

11. Method according to any one of the preceding claims, in which the lower reflector (25, 55) and the upper reflector (15, 45) each comprise two materials having a difference in refractive index which is greater than or equal to 0.3.

12. Method according to Claim 11, in which the lower reflector (25, 55) and/or the upper reflector (15, 45) is formed on the basis of the following pairs of materials:
- silica and silicon nitride;
- silica and titanium oxide;
- silica and amorphous silicon;
- germanium and zinc sulphide.

13. Method according to either one of Claims 7 and 10, the method comprising the upper reflector (15) focusing the light wave (3) emitted by the light source on the particle.

14. Method according to Claim 13, comprising illuminating the sample according to various positions of the light source (2) and of the upper reflector (15), in a direction (X, Y) which is perpendicular to the propagation axis (Z), a focal point (F) of the light wave emitted by the light source corresponding to each position of the light source, the focal point being located in the optical cavity.
